# EUROPEAN PATENT SPECIFICATION

(11) **EP 3 010 314 B1**
(45) Date of publication and mention of the grant of the patent: **18.07.2018**
(21) Application number: 14810188.4
(22) Date of filing: 05.06.2014
(51) Int. Cl.: H05B 41/24, G03B 21/20, H04N 9/31

(54) **LIGHT SOURCE DEVICE, PROJECTOR, AND PROJECTION SYSTEM**
LICHTQUELLENVORRICHTUNG, PROJEKTOR UND PROJEKTIONSSYSTEM
DISPOSITIF DE SOURCE LUMINEUSE, PROJECTEUR ET SYSTÈME DE PROJECTION

(30) Priority: 10.06.2013 JP 2013122067
(43) Date of publication of application: 20.04.2016
(73) Proprietor: Seiko Epson Corporation, Shinjuku-ku Tokyo 163-0811 (JP)
(72) Inventor: SATO, Shun, Suwa-shi, Nagano 392-8502 (JP)
(74) Representative: Miller Sturt Kenyon
(86) International application number: PCT/JP2014/002988
(87) International publication number: WO 2014/199599

(56) References cited:
- EP-A1- 2 413 188
- WO-A1-2010/035368
- WO-A1-2011/122274
- JP-A- 2013 077 501
- JP-A- 2013 083 714
- US-A1- 2010 123 406
- US-A1- 2012 162 611

## Description

### Technical Field

The present invention relates to a light source device, a projector, and a projection system.

### Background Art

Discharge lamps such as high pressure mercury lamps emit light by performing arc discharge in plasmarized gases. Projectors that correspond to 3D and perform stereoscopic video display by using such discharge lamps have been put into practice. In one of the schemes for the projectors corresponding to 3D, input signals are divided into right-eye and left-eye signals, the right-eye and left-eye signals are alternately transmitted in sequence, and right-eye and left-eye videos are alternately projected. Observers wear active shutter glasses in which two shutters are alternately opened and closed and selectively see the left-eye videos with the left eyes and the right-eye videos with the right eyes. Thus, the observers recognize the videos seen by the observers as stereoscopic videos. However, when the observers wear the foregoing active shutter glasses, the videos coming to the eyes of the observers are blocked by the shutter during a substantially half period. For this reason, a problem arises in that the videos are darkened.

For this problem, projectors that adopt schemes of performing light control on discharge lamps in synchronization with active shutter glasses have been proposed (for example, see PLT 1 below). Such projectors perform light control operations of increasing luminance of the discharge lamps at the time of opening of the shutters of the glasses and decreasing the luminance of the discharge lamps at the time of closing of the shutters of the glasses. In other words, power supplied to the discharge lamps is increased at the time of opening of the shutters, and power supplied to the discharge lamps is decreased at the time of closing of the shutters. When such light control is performed, the luminance at the time of opening of the shutter can be increased by an amount of luminance decreased at the time of closing of the shutters without changing average luminance of the discharge lamps. Thus, the observers can view bright videos.

### Citation List

### Patent Literature

PTL 1: JP-A-2012-32504

US 2012/162611 discloses a projector that outputs a first image and a second image alternately. The projector includes a discharge lamp driving section that supplies, to a discharge lamp, a drive current that drives the discharge lamp, a state detecting section that detects a deteriorating state of the discharge lamp, and a control section that controls the discharge lamp driving section. The control section controls the discharge lamp driving section so that the absolute value of the drive current becomes relatively small in a first period and relatively large in a second period. In the second period, the control section controls the discharge lamp driving section so that the discharge lamp driving section supplies an alternating current to the discharge lamp as the drive current and controls the discharge lamp driving section so that at least part of the frequency of the drive current is decreased with the progress of the deteriorating state.

### Summary of Invention

### Technical Problem

Incidentally, arc discharge is known to produce various reactions inside discharge lamps and cause illumination drop of the discharge lamps. In order to resolve the problems, it is necessary to suppress the illumination drop of the discharge lamps and increase life spans of the discharge lamps.

In general, three main causes of blackening in which electrode materials evaporated by arc discharge are attached to the inner walls of luminous tubes of discharge lamps, devitrification in which the inner walls of the luminance tubes are crystallized due to high heat to be clouded and transmittance is lowered, and consumption of electrodes occurring by arc discharge are known as causes of the illumination drop of the discharge lamps.

In driving in which there is a power difference as in a change in power supplied to the above-described discharge lamps, loads applied to the electrodes of the discharge lamps increase and the electrodes are easily consumed. As a result, there are problems that the illumination of the discharge lamps is dropped due to the consumption of the electrodes and the life spans of the discharge lamps are shortened as a result.

An aspect of the invention is devised in view of the above-described problems of the related art and an object of the invention is to provide a light source device capable of suppressing consumption of an electrode of a discharge lamp at the time of driving of the discharge lamp in which there is a power difference and improving a life span of the discharge lamp and a projector using the light source device. Further, another object of the invention is to provide a projection system using the projector.

### Solution to Problem

A light source device according to an aspect of the invention is defined in claim 1.

Movement of arc luminescent spots is considered as one of the reasons of consumption of electrodes in driving of the discharge lamp in which there is a power difference. The movement of the arc luminescent spots easily occurs when power supplied to the discharge lamp transitions from a large state to a small state. When the movement of the arc luminescent spots occurs, the positions of melting electrodes or the amount of melting electrodes are changed. As a result, the shapes of the electrodes become unstable and the electrodes are easily consumed.

In this configuration, in contrast, a high-frequency current of 750 Hz or more is used in the first period in which the absolute value of the driving current is small, in other words, the power is small. Therefore, when the power supplied to the discharge lamp decreases, the movement of the arc luminescent spots is suppressed. As a result, the consumption of the electrode is suppressed. Accordingly, the life span of the discharge lamp can be improved.

The absolute value of the driving current during the first period is preferably 80% or less of the absolute value of the driving current during the second period.

In this configuration, the light source device proper for using the projector corresponding to 3D can be obtained.

Preferably, the control unit is configured to supply an alternating current with mutually opposite phases as the driving current to the discharge lamp during two sequential first periods.

In this configuration, since the consumption of both electrodes is uniformized, it is possible to prevent one electrode from being unevenly consumed and prevent a distance between the electrodes from being spread.

Preferably, the control unit is configured to supply an alternating current with mutually opposite phases as the driving current to the discharge lamp during two sequential second periods.

In this configuration, since the consumption of both electrodes is uniformized, it is possible to prevent one electrode from being unevenly consumed and prevent a distance between the electrodes from being widened.

A projector according to an aspect of the invention is defined in claim 5.

In this configuration, since the lifespan of the discharge lamp can be improved, the projector with high reliability can be obtained.

A projection system according to an aspect of the invention is defined in claim 6.

In this configuration, since the life span of the discharge lamp can be improved, the projection system with high reliability can be obtained.

### Brief Description of Drawings

[Fig. 1] Fig. 1 is a schematic diagram illustrating the configuration of a projector according to an embodiment.
[Fig. 2] Fig. 2 is a sectional view illustrating a discharge lamp according to the embodiment.
[Fig. 3] Fig. 3 is a block diagram illustrating a projection system according to the embodiment.
[Fig. 4] Fig. 4 is a circuit diagram illustrating a discharge lamp lighting device according to the embodiment.
[Fig. 5] Fig. 5 is a block diagram illustrating a configuration example of a control unit according to the embodiment.
[Fig. 6] Fig. 6 is a diagram illustrating the shapes of projections at the front ends of electrodes of the discharge lamp.
[Fig. 7] Fig. 7 is a timing chart illustrating various operations of the projection system.
[Fig. 8] Fig. 8 is a diagram illustrating an example of a driving current waveform.
[Fig. 9] Fig. 9 is a diagram illustrating movement of arc luminescent spots at the front ends of the electrodes.
[Fig. 10] Fig. 10 is a diagram illustrating a photo in which the movement of the arc luminescent spots is shown.

### Description of Embodiments

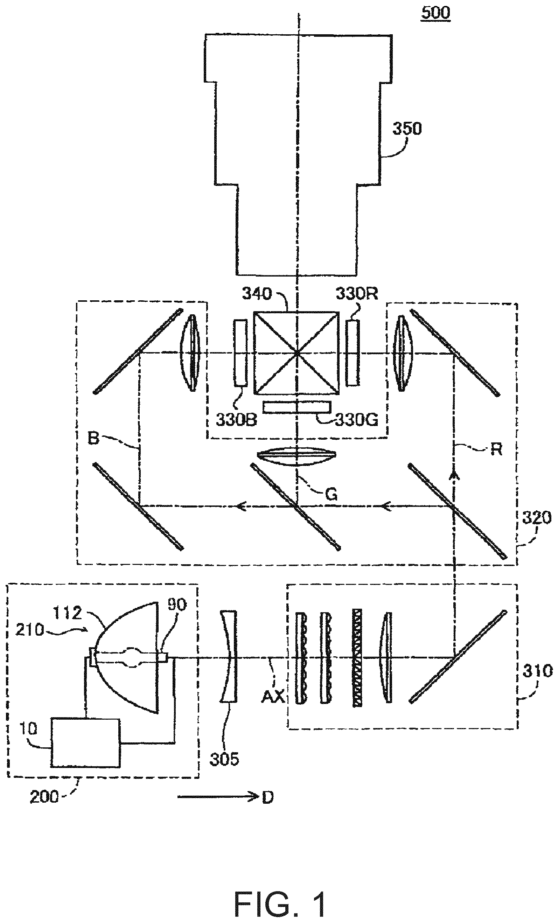

Hereinafter, a projection system according to an embodiment of the invention will be described with reference to Figs. 1 to 10.

The scope of the invention is not limited to the following embodiment, but the embodiment may be modified in any manner within the scope of the invention. In the following drawings, actual structures, scales or numbers of the structures, and the like are different in some cases to facilitate configurations.

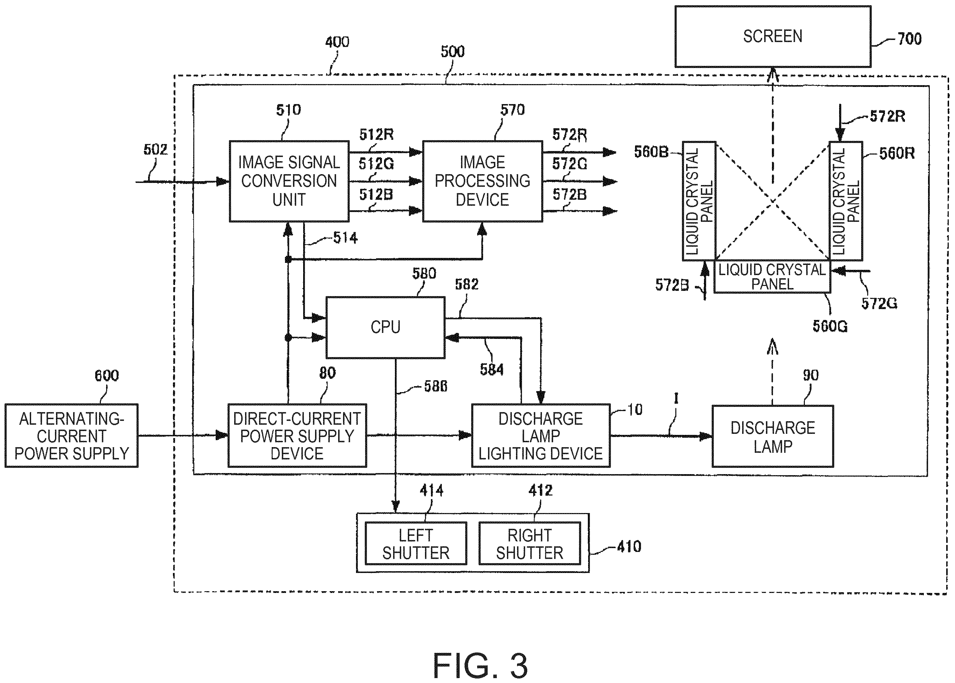

Fig. 3 is a block diagram illustrating a projection system according to the embodiment.

As illustrated in Fig. 3, a projection system 400 according to the embodiment includes a projector 500 and active shutter glasses 410. The projector 500 alternately projects right-eye and left-eye videos to a screen 700 in a time division manner.

The active shutter glasses 410 include a right-eye shutter 412 and a left-eye shutter 414. When an observer wears the active shutter glasses 410, the right-eye shutter 412 is closed so that a visual field of the right eye side is blocked. When the observer wears the active shutter glasses 410, the left-eye shutter 414 is closed so that a visual field of the left eye side is blocked. The right-eye shutter 412 and the left-eye shutter 414 are composed of, for example, liquid crystal shutters.

Hereinafter, an optical system of the projector 500 will be described.

Fig. 1 is a schematic diagram illustrating the configuration of the projector 500 according to the embodiment.

As illustrated in Fig. 1, the projector 500 according to the embodiment includes a light source device 200, a parallelizing lens 305, an illumination optical system 310, a color separation optical system 320, three liquid crystal light valves 330R, 330G, and 330B (light modulation elements), a cross dichroic prism 340, and a projection optical system 350.

Light emitted from the light source device 200 passes through the parallelizing lens 305 and is incident on the illumination optical system 310. The parallelizing lens 305 has a function of parallelizing the light from the light source device 200.

The illumination optical system 310 has a function of performing adjustment so that the illumination of the light emitted from the light source device 200 is uniformized in the liquid crystal light valves 330R, 330G, and 330B. The illumination optical system 310 has a function of arranging a polarization direction of the light emitted from the light source device 200 in one direction. The reason is that the light emitted from the light source device 200 is effectively used in the liquid crystal light valves 330R, 330G, and 330B.

The light of which an illumination distribution and the polarization direction are adjusted is incident on the color separation optical system 320. The color separation optical system 320 separates the incident light into three color pieces of light, red light (R), green light (G), and blue light (B). The three pieces of color light are modulated by the liquid crystal light valves 330R, 330G, and 330B corresponding to the respective colors. The liquid crystal light valves 330R, 330G, and 330B include liquid crystal panels 560R, 560G, and 560B to be described below and polarization plates (not illustrated).

The polarization plates are disposed on a light incident side and a light exit side of the liquid crystal panels 560R, 560G, and 560B.

The three pieces of modulated light are synthesized by the cross dichroic prism 340. The synthesized light is incident on the projection optical system 350. The projection optical system 350 projects the incident light to the screen 700 (see Fig. 3). Thus, a video is displayed on the screen 700. Various known configurations can be adopted as the configurations of the parallelizing lens 305, the illumination optical system 310, the color separation optical system 320, the cross dichroic prism 340, and the projection optical system 350.

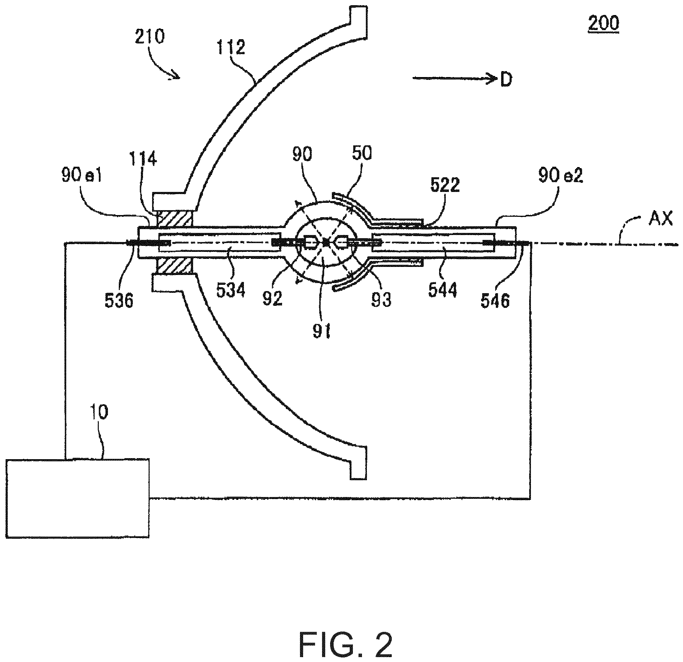

Fig. 2 is a sectional view illustrating the configuration of the light source device 200. The light source device 200 includes a light source unit 210 and a discharge lamp lighting device (discharge lamp driving device) 10. In Fig. 2, the sectional view of the light source unit 210 is illustrated. The light source unit 210 includes a main reflection mirror 112, a discharge lamp 90, and a sub-reflection mirror 50.

The discharge lamp lighting device 10 supplies a driving current (driving power) to the discharge lamp 90 to light the discharge lamp 90. The main reflection mirror 112 reflects light radiated from the discharge lamp 90 in an irradiation direction D. The irradiation direction D is parallel to an optical axis AX of the discharge lamp 90.

The shape of the discharge lamp 90 is a rod shape extending in the irradiation direction D. One end of the discharge lamp 90 is referred to as a first end 90e1 and the other end of the discharge lamp 90 is referred to as a second end 90e2. The material of the discharge lamp 90 is, for example, a transmissive material such as quartz glass. A middle portion of the discharge lamp 90 is swollen in a spherical shape and the inside of the spherical shape is referred to as a discharge space 91. In the discharge space 91, a gas which is a discharge medium containing a rare gas and a metal halogen compound is sealed.

In the discharge space 91, the front ends of a first electrode 92 and a second electrode 93 are projected. The first electrode 92 is disposed on the side of the first end 90e1 of the discharge space 91. The second electrode 93 is disposed on the side of the second end 90e2 of the discharge space 91. The shapes of the first electrode 92 and the second electrode 93 are rod shapes extending in the optical axis AX. In the discharge space 91, the front ends of the first electrode 92 and the second electrode 93 are disposed to be separated by a predetermined distance and to face each other. The material of the first electrode 92 and the second electrode 93 are, for example, metal such as tungsten.

A first terminal 536 is provided at the first end 90e1 of the discharge lamp 90. The first terminal 536 and the first electrode 92 are electrically connected by a conductive member 534 passing through the inside of the discharge lamp 90. Similarly, a second terminal 546 is provided at the second end 90e2 of the discharge lamp 90. The second terminal 546 and the second electrode 93 are electrically connected by a conductive member 544 passing through the inside of the discharge lamp 90. The material of the first terminal 536 and the second terminal 546 is, for example, metal such as tungsten. As the material of the conductive members 534 and 544, for example, molybdenum foil is used.

The first terminal 536 and the second terminal 546 are connected to the discharge lamp lighting device 10. The discharge lamp lighting device 10 supplies a driving current to the first terminal 536 and the second terminal 546 to drive the discharge lamp 90. As a result, arc discharge is generated between the first electrode 92 and the second electrode 93. Light (discharged light) generated by the arc discharge is radiated in all directions from a discharge position, as indicated by dotted arrows.

The main reflection mirror 112 is fixed to the first end 90e1 of the discharge lamp 90 by a fixing member 114. Of the discharged light, light travelling toward the side opposite to the irradiation direction D is reflected in the irradiation direction D by the main reflection mirror 112. The shape of the reflection surface (the surface on the side of the discharge lamp 90) of the main reflection mirror 112 is not particularly limited within the scope in which the discharged light can be reflected in the irradiation direction D. For example, the shape of the reflection surface may be spheroidal or rotated-paraboloidal. For example, when the shape of the reflection surface of the main reflection mirror 112 is rotated-paraboloidal, the main reflection mirror 112 can convert the discharged light into light substantially parallel to the optical axis AX. Thus, the parallelizing lens 305 can be omitted.

The sub-reflection mirror 50 is fixed on the side of the second end 90e2 of the discharge lamp 90 by a fixing member 522. The shape of the reflection surface (the surface on the side of the discharge lamp 90) of the sub-reflection mirror 50 is a spherical shape surrounding the portion of the second end 90e2 of the discharge space 91. Of the discharged light, light travelling toward the side opposite to the side on which the main reflection mirror 112 is disposed is reflected toward the main reflection mirror 112 by the sub-reflection mirror 50. Thus, the use efficiency of the light radiated from the discharge space 91 can be improved.

The material of the fixing members 114 and 522 is not particularly limited within the scope in which the material is a heat-resistant material resisting heat generated from the discharge lamp 90 and is, for example, an inorganic adhesive. The method of fixing the disposition of the main reflection mirror 112 and the sub-reflection mirror 50, and the discharge lamp 90 is not limited to the method of fixing the main reflection mirror 112 and the sub-reflection mirror 50 to the discharge lamp 90, but any method can be adopted. For example, the discharge lamp 90 and the main reflection mirror 112 may be separately fixed to the casing (not illustrated) of the projector. The same applies to the sub-reflection mirror 50.

Hereinafter, the circuit configuration of the projector 500 will be described.

Fig. 3 is a diagram illustrating an example of the circuit configuration of the projector 500 according to the embodiment. The projector 500 includes an image signal conversion unit 510, a direct-current power supply device 80, liquid crystal panels 560R, 560G, and 560B, an image processing device 570, and a central processing unit (CPU) 580 in addition to the optical system illustrated in Fig. 1.

The image signal conversion unit 510 converts image signals 502 (luminance-color difference signals, analog RGB signals, or the like) input from the outside into a digital RGB signal of a predetermined word length to generate image signals 512R, 512G, and 512B and supplies the image signals 512R, 512G, and 512B to the image processing device 570. When stereoscopic video signals in which right-eye and left-eye videos are alternately switched are input as the image signals 502 at a predetermined switching timing, the image signal conversion unit 510 supplies a synchronization signal 514 to the CPU 580 based on the switching timing of the right-eye and left-eye videos.

The image processing device 570 performs image processing on each of the three image signals 512R, 512G, and 512B. The image processing device 570 supplies driving signals 572R, 572G, and 572B for driving the liquid crystal panels 560R, 560G, and 560B to the liquid crystal panels 560R, 560G, and 560B.

The direct-current power supply device 80 converts an alternating voltage supplied from an external alternating-current power supply 600 into a constant direct-current voltage. The direct-current power supply device 80 supplies the direct-current voltage to the image signal conversion unit 510 and the image processing device 570 on the secondary side of a transformer (included in the direct-current power supply device 80 although not illustrated) and to the discharge lamp lighting device 10 on the primary side of the transformer.

The discharge lamp lighting device 10 generates a high voltage between the electrodes of the discharge lamp 90 at the time of activation and produces dielectric breakdown to form a discharge path. Thereafter, the discharge lamp lighting device 10 supplies a driving current I so that the discharge lamp 90 maintains the discharge.

The liquid crystal panels 560R, 560G, and 560B are included in the liquid crystal light valves 330R, 330G, and 330B described above, respectively. The liquid crystal panels 560R, 560G, and 560B modulate transmittance (luminance) of the color light incident on the liquid crystal panels 560R, 560G, and 560B via the above-described optical system based on the driving signals 572R, 572G, and 572B, respectively.

The CPU 580 controls various operations until the projector 500 turns on and then turns off. For example, in the example of Fig. 3, a turning-on command or a turning-off command is output to the discharge lamp lighting device 10 through a communication signal 582. The CPU 580 receives turning-on information of the discharge lamp 90 through the communication signal 584 from the discharge lamp lighting device 10. Based on the synchronization signal 514, the CPU 580 outputs a control signal 586 for controlling the active shutter glasses 410 in synchronization with the image signals 502 to the active shutter glasses 410 via a wired or wireless communication unit. In the right-eye shutter 412 and the left-eye shutter 414 of the active shutter glasses 410, opening and closing operations are controlled based on the control signal 586.

Hereinafter, the configuration of the discharge lamp lighting device 10 will be described.

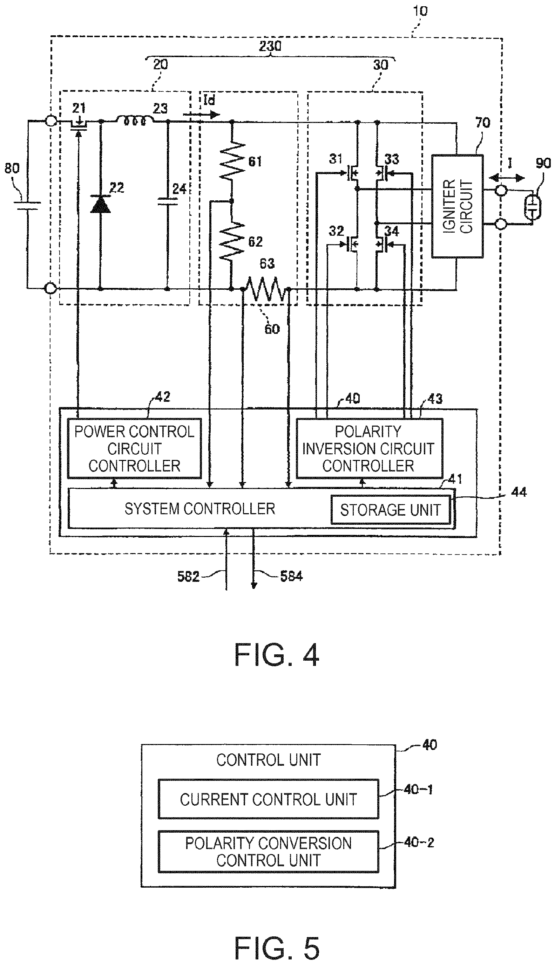

Fig. 4 is a diagram illustrating an example of the circuit configuration of the discharge lamp lighting device 10.

As illustrated in Fig. 4, the discharge lamp lighting device 10 includes a power control circuit 20, a polarity inversion circuit 30, a control unit 40, an operation detection unit 60, and an igniter circuit 70.

The power control circuit 20 generates a driving power to be supplied to the discharge lamp 90. In the embodiment, the power control circuit 20 is composed of a down-chopper circuit that receives a voltage from the direct-current power supply device 80 as an input, drops the input voltage, and outputs a direct current Id.

The power control circuit 20 is configured to include a switch element 21, a diode 22, a coil 23, and a capacitor 24. The switch element 21 is composed of, for example, a transistor. In the embodiment, one end of the switch element 21 is connected to a positive voltage side of the direct-current power supply device 80 and the other end of the switch element 21 is connected to the cathode terminal of the diode 22 and one end of the coil 23.

One end of the capacitor 24 is connected to the other end of the coil 23 and the other end of the capacitor 24 is connected to the anode terminal of the diode 22 and a negative voltage side of the direct-current power supply device 80. A current control signal is input from the control unit 40 to be described below to the control terminal of the switch element 21 so that ON/OFF of the switch element 21 is controlled. As the current control signal, for example, a pulse width modulation (PWM) control signal may be used.

When the switch element 21 is turned ON, a current flows in the coil 23 so that energy can be stored in the coil 23. Thereafter, when the switch element 21 is turned OFF, the energy stored in the coil 23 is radiated to a path passing the capacitor 24 and the diode 22. As a result, the direct current Id according to a ratio of a time in which the switch element 21 is turned ON is generated.

The polarity inversion circuit 30 inverts the polarity of the direct current Id input from the power control circuit 20 at a predetermined timing. Thus, the polarity inversion circuit 30 generates and outputs a driving current I which is a direct current continuing for a controlled time or a driving current I which is an alternating current with any frequency. In the embodiment, the polarity inversion circuit 30 is composed of an inverter bridge circuit (full-bridge circuit).

The polarity inversion circuit 30 includes, for example, a first switch element 31, a second switch element 32, a third switch element 33, and a fourth switch element 34 composed of transistors or the like. The polarity inversion circuit 30 has a configuration in which the first switch element 31 and the second switch element 32 that are connected to each other in series and the third switch element 33 and the fourth switch element 34 that are connected to each other in series are connected to each other in parallel. A polarity inversion control signal is input from the control unit 40 to each of the control terminals of the first switch element 31, the second switch element 32, the third switch element 33, and the fourth switch element 34. Based on the polarity inversion control signal, ON/OFF operations of the first switch element 31, the second switch element 32, the third switch element 33, and the fourth switch element 34 are controlled.

In the polarity inversion circuit 30, an operation of alternately turning ON/OFF the first switch element 31 and the second switch element 32, and the third switch element 33 and the fourth switch element 34 is repeated. Thus, the polarity of the direct current Id output from the power control circuit 20 is alternately inverted. The driving current I which is a direct current with the same polarity state continuing for a controlled time or the driving current I which is an alternating current with a controlled frequency is generated and output from a common connection point of the first switch element 31 and the second switch element 32 and a common connection point of the third switch element 33 and the fourth switch element 34.

That is, the polarity inversion circuit 30 performs control such that the second switch element 32 and the third switch element 33 are turned OFF when the first switch element 31 and the fourth switch element 34 are turned ON, and the second switch element 32 and the third switch element 33 are turned ON when the first switch element 31 and the fourth switch element 34 are turned OFF. Accordingly, when the first switch element 31 and the fourth switch element 34 are turned ON, the driving current I flowing in an order of the first switch element 31, the discharge lamp 90, and the fourth switch element 34 is generated from the one end of the capacitor 24. When the second switch element 32 and the third switch element 33 are turned ON, the driving current I flowing in an order of the third switch element 33, the discharge lamp 90, and the second switch element 32 is generated from the one end of the capacitor 24.

In the embodiment, a combined portion of the power control circuit 20 and the polarity inversion circuit 30 corresponds to a discharge lamp driving unit 230. That is, the discharge lamp driving unit 230 supplies the driving current I for driving the discharge lamp 90 to the discharge lamp 90.

The control unit 40 controls the discharge lamp driving unit 230. In the example of Fig. 4, the control unit 40 controls a hold time in which the same polarity of the driving current I continues, a current value and a frequency of the driving current I, and the like by controlling the power control circuit 20 and the polarity inversion circuit 30. The control unit 40 performs polarity inversion control on the polarity inversion circuit 30 such that the hold time in which the same polarity of the driving current I continues, the frequency of the driving current I, and the like are controlled in accordance with a polarity inversion timing of the driving current I. The control unit 40 performs current control on the power control circuit 20 such that the current value of the direct current Id to be output is controlled.

The configuration of the control unit 40 is not particularly limited. In the embodiment, the control unit 40 is configured to include a system controller 41, a power control circuit controller 42, and a polarity inversion circuit controller 43. A part or all of the control unit 40 may be composed of a semiconductor integrated circuit.

The system controller 41 controls the power control circuit 20 and the polarity inversion circuit 30 by controlling the power control circuit controller 42 and the polarity inversion circuit controller 43. The system controller 41 may control the power control circuit controller 42 and the polarity inversion circuit controller 43 based on the driving current I and a driving voltage Vla detected by the operation detection unit 60.

In the embodiment, the system controller 41 is configured to include a storage unit 44. The storage unit 44 may be provided independently from the system controller 41.

The system controller 41 may control the power control circuit 20 and the polarity inversion circuit 30 based on information stored in the storage unit 44. For example, the storage unit 44 may store information regarding driving parameters of the hold time in which the same polarity of the driving current I continues, the current value and the frequency of the driving current I, a waveform, and a modulation pattern.

The power control circuit controller 42 controls the power control circuit 20 by outputting a current control signal to the power control circuit 20 based on a control signal from the system controller 41.

The polarity inversion circuit controller 43 controls the polarity inversion circuit 30 by outputting a polarity inversion control signal to the polarity inversion circuit 30 based on a control signal from the system controller 41.

The control unit 40 is realized using a dedicated circuit and can perform various kinds of control on the control described above or a process to be described below. In contrast, the control unit 40 can also perform various kinds of control on the processes, for example, by causing the CPU 580 to execute a control program stored in the storage unit 44 and function as a computer.

Fig. 5 is a diagram illustrating another configuration example of the control unit 40. As illustrated in Fig. 5, the control unit 40 may be configured to function as a current control unit 40-1 that controls the power control circuit 20 and function as a polarity inversion control unit 40-2 that controls the polarity inversion circuit 30 in accordance with the control program.

In the example illustrated in Fig. 4, the control unit 40 is composed of a part of the discharge lamp lighting device 10. In contrast, some of the functions of the control unit 40 may be configured to be performed by the CPU 580.

The operation detection unit 60 includes, for example, a voltage detection unit that detects the driving voltage Vla of the discharge lamp 90 and outputs driving voltage information to the control unit 40 and a current detection unit that detects the driving current I and outputs driving current information to the control unit 40. In the embodiment, the operation detection unit 60 is configured to include a first resistor 61, a second resistor 62, and a third resistor 63.

In the embodiment, the voltage detection unit detects the driving voltage Vla by a voltage divided into the first resistor 61 and the second resistor 62 connected in series to each other in parallel to the discharge lamp 90. In the embodiment, the current detection unit detects the driving current I by a voltage generated in the third resistor 63 connected in series to the discharge lamp 90.

The igniter circuit 70 operates only at the time of start of the turning-ON of the discharge lamp 90. The igniter circuit 70 supplies a high voltage (a voltage higher than at the time of normal turning-on of the discharge lamp 90) necessary to produce dielectric breakdown and form a discharge path between the electrodes (the first electrode 92 and the second electrode 93) of the discharge lamp 90 at the time of start of the turning-on of the discharge lamp 90 between the electrodes (the first electrode 92 and the second electrode 93) of the discharge lamp 90. In the embodiment, the igniter circuit 70 is connected in parallel to the discharge lamp 90.

Hereinafter, a relation between the polarity of the driving current I and a temperature will be described.

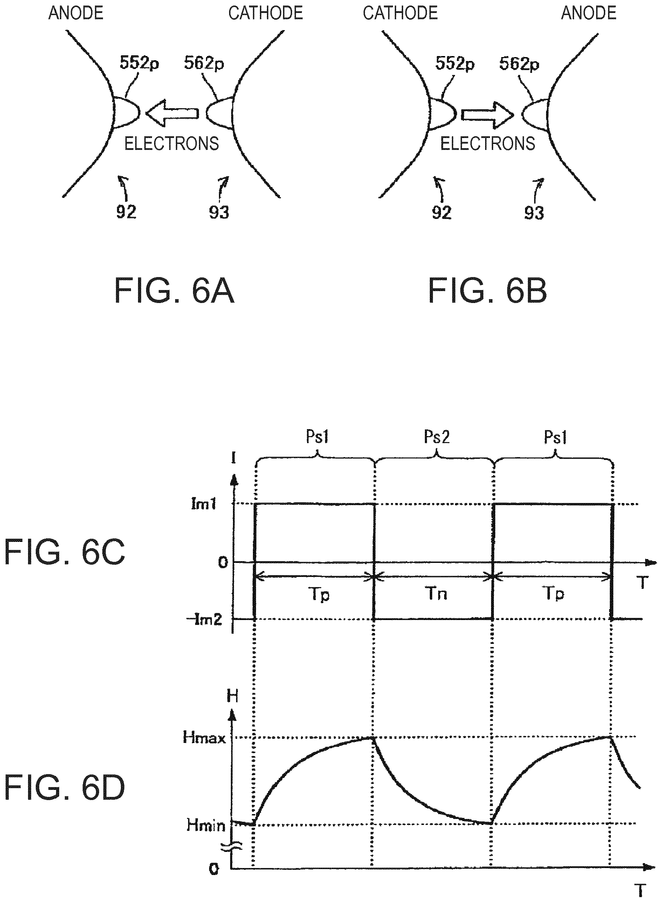

Figs. 6(A) to 6(D) are diagrams illustrating the relation between the polarity of the driving current I supplied to the discharge lamp 90 and the temperature of the electrodes. Figs. 6(A) and 6(B) illustrate operation states of the first electrode 92 and the second electrode 93. In the drawings, the front ends of the first electrode 92 and the second electrode 93 are illustrated. Protrusions 552p and 562p are formed at the front ends of the first electrode 92 and the second electrode 93. Discharge occurring between the first electrode 92 and the second electrode 93 occurs mainly between the protrusions 552p and 562p. When there are the protrusions 552p and 562p as in the embodiment, movement of discharge positions (positions of arc luminescent spots) in the first electrode 92 and the second electrode 93 can be suppressed further than when there are no protrusions.

Fig. 6(A) illustrates a first polarity state Ps1 in which the first electrode 92 operates as an anode and the second electrode 93 operates as a cathode. In the first polarity state Ps1, electrons move from the second electrode 93 (the cathode) to the first electrode 92 (the anode) through the discharge. The electrons are radiated from the cathode (the second electrode 93). The electrons radiated from the cathode (the second electrode 93) collide against the front end of the anode (the first electrode 92).

Heat is generated due to this collision and the temperature of the front end (the protrusion 552p) of the anode (the first electrode 92) increases.

Fig. 6(B) illustrates a second polarity state Ps2 in which the first electrode 92 operates as a cathode and the second electrode 93 operates as an anode. In the second polarity state Ps2, in contrast to the first polarity state Ps1, electrons move from the first electrode 92 to the second electrode 93. As a result, the temperature of the front end (the protrusion 562p) of the second electrode 93 increases.

Thus, the temperature of the anode which the electrons collide against is easily higher than the temperature of the cathode radiating the electrons.

Fig. 6(C) is a timing chart illustrating an example of the driving current I supplied to the discharge lamp 90. The horizontal axis represents a time T and the vertical axis represents a current value of the driving current I. The driving current I indicates a current that flows in the discharge lamp 90. A positive value indicates the first polarity state Ps1 and a negative value indicates the second polarity state Ps2.

In the example illustrated in Fig. 6(C), a square-wave alternating current is used as the driving current I. In the example illustrated in Fig. 6(C), the first polarity state Ps1 and the second polarity state Ps2 are alternately repeated. Here, a first polarity section Tp indicates a time in which the first polarity state Ps1 continues and a second polarity section Tn indicates a time in which the second polarity state Ps2 continues. In the example illustrated in Fig. 6(C), an average current value in the first polarity section Tp is Im1 and an average current value in the second polarity section Tn is -Im2. The frequency of the driving current I proper for the driving of the discharge lamp 90 can be decided experimentally in accordance with the characteristics of the discharge lamp 90 (for example, a value is adopted in the range of 30 Hz to 1 kHz). Other values Im1, -Im2, Tp, and Tn can similarly be decided experimentally.

Fig. 6(D) is a timing chart illustrating a temperature change of the first electrode 92. The horizontal axis represents a time T and the vertical axis represents a temperature H. In the first polarity state Ps1, the temperature H of the first electrode 92 increases. In the second polarity state Ps2, the temperature H of the first electrode 92 decreases. Since the first polarity state Ps1 and the second polarity state Ps2 are repeated, the temperature H is changed periodically between a minimum value Hmin and a maximum value Hmax. Although not illustrated, the temperature of the second electrode 93 is changed at an opposite phase to the temperature H of the first electrode 92. That is, the temperature of the second electrode 93 decreases in the first polarity state Ps1 and the temperature of the second electrode 93 increases in the second polarity state Ps2.

Hereinafter, a specific example of control of the driving current I in the projection system 400 will be described.

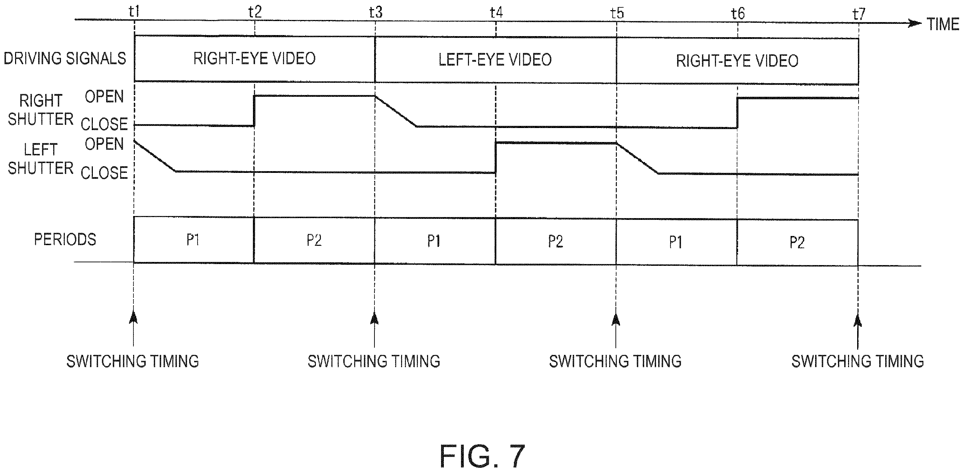

Fig. 7 is a timing chart illustrating various operations of the projection system.

As illustrated in Fig. 7, content of the driving signals 572R, 572G, and 572B, open and closed states of the right-eye shutter 412, open and closed states of the left-eye shutter 414, periods, and a temporal change in a switching timing are shown. The horizontal axis of Fig. 7 represents a time.

In the example illustrated in Fig. 7, the driving signals 572R, 572G, and 572B are driving signals corresponding to a right-eye video from time t1 to time t3, a left-eye video from time t3 to time t5, and a right-eye video from time t5 to time 7. Accordingly, in the example illustrated in Fig. 7, the projector 500 switches and alternately outputs the right-eye and left-eye videos using time t1, time t3, time t5, and time t7 as switching timings.

A period interposed between temporally adjacent switching timings starts at a first period P1 and ends at a second period P2. In the example illustrated in Fig. 7, for example, a period interposed between time t1 and time t3 which are switching timings starts in the first period P1 between time t1 and time t2 and ends in the second period P2 between time t2 to time t3. The same also applies to a period interposed between time t3 and time t5 which are switching timings and a period interposed between time t5 and time t7 which are switching timings.

In the example illustrated in Fig. 7, the length of the first period P1 and the length of the second period P2 are the same. However, the length of the first period P1 and the length of the second period P2 can be appropriately set as necessary. A third period may be present between the first period P1 and the second period P2. During the third period, control different from the control of the driving current I during the first period P1 and the second period P2 may be performed, as will be described below.

In a case illustrated in Fig. 7, video signals are written to the liquid crystal light valves 330R, 330G, and 330B once during each of the first period P1 and the second period P2. That is, a total of two-time video signals are written to the liquid crystal light valves 330R, 330G, and 330B during a one-time period of one-eye videos. At this time, when the length of the period (one field) of the one-eye videos is 1/120 s, video signals are written to the liquid crystal light valves 330R, 330G, and 330B at a one-time ratio during 1/240s. In other words, the driving frequency of the liquid crystal light valves 330R, 330G, and 330B is 240 Hz.

The right-eye shutter 412 enters an open state during at least some of the periods in that the driving signals 572R, 572G, and 572B corresponding to the right-eye videos are input to the liquid crystal panels 560R, 560G, and 560B. In the example illustrated in Fig. 7, the right-eye shutter 412 is in the closed state from time t1 to time t2, that is, during the first period P1 and is in the open state from time t2 to time t3, that is, during the second period P2. During a period in which the driving signals 572R, 572G, and 572B corresponding to the left-eye videos are input to the liquid crystal panels 560R, 560G, and 560B, the right-eye shutter 412 starts to close from the switching time (time t3) and ends the close during the first period P1 (from time t3 to time t4), and is in the closed state during the second period P2 (from time t4 to time t5). The change in the open and closed states of the right-eye shutter 412 from time t5 to time t7 is the same as the change in the open and closed states from time t1 to time t5.

In regard to the left-eye shutter 414, the switching timings are deviated by one switching timing and the same open and close operations as the right-eye shutter 412 are performed. That is, during a period (for example, a period from time t1 to a time t3) in which the right-eye videos are output, the left-eye shutter 414 performs the same opening and closing operations as the right-eye shutter 412 during a period (for example, a period from time t3 to time t5) in which the left-eye videos flow. Further, during a period (for example, a period from time t3 to time t5) in which the left-eye videos are output, the left-eye shutter 414 performs the same opening and closing operations as the right-eye shutter 412 during a period (for example, a period from time t5 to time t7) in which the right-eye videos flow.

In the example illustrated in Fig. 7, in the first period P1, there is a period in which both of the right-eye shutter 412 and the left-eye shutter 414 are closed.

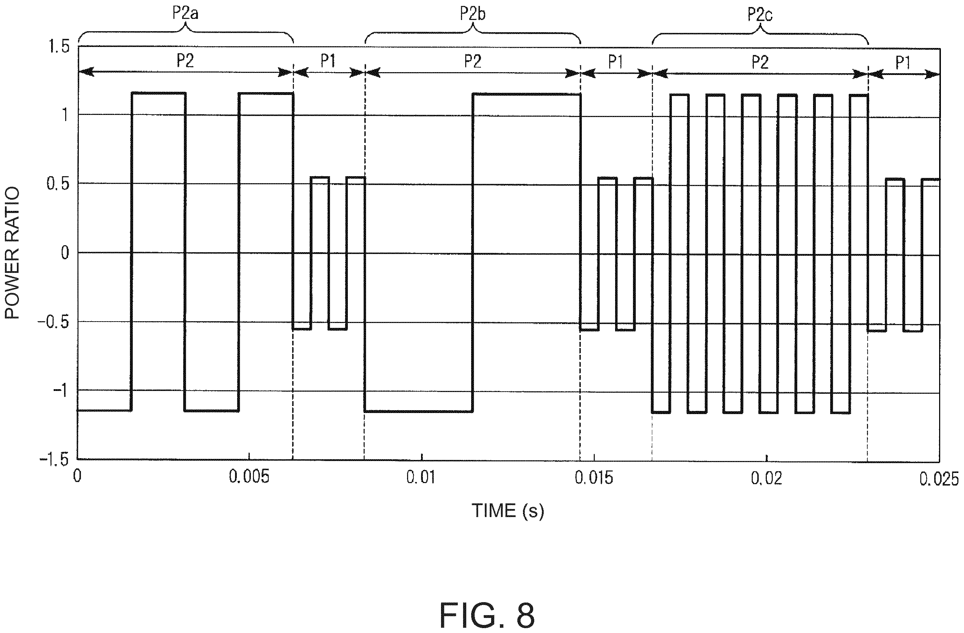

Fig. 8 is a timing chart illustrating an example of a driving current waveform.

The vertical axis represents a power ratio of the driving current supplied to the discharge lamp 90. The power ratio is a relative value of the driving power when the driving power of a rated normal mode (at the time of 2D display) is set to 1. When the distance between the electrodes is constant, the driving voltage is considered to be constant. At this time, since the driving current and the driving power have a proportional relation, the waveform in Fig. 8 can be regarded as a waveform indicating the relative value of the driving current when the driving current of the rated normal mode (the time of 2D display) is 1. In Fig. 8, the power ratio in the first polarity state Ps1 is shown as a positive value and the power ratio in the second polarity state Ps2 is shown as a negative value.

The horizontal axis represents a time, and a timing at which the right-eye shutter 412 or the left-eye shutter 414 is opened, that is, a boundary (for example, time t2, time t4, or time t6 in Fig. 7) in which the first period P1 transitions to the second period P2, is shown as 0 s.

In the embodiment, as illustrated in Fig. 8, the driving current supplied to the discharge lamp 90 is a square-wave alternating current. In other words, the driving current supplied to the discharge lamp 90 during the first period P1 and the second period P2 is a square-wave alternating current.

The alternating current during the first period P1 is a high-frequency alternating current. For example, the frequency of the alternating current during the first period P1 is equal to or more than 750 Hz and equal to or less than 10 kHz. A specific example of the frequency is, for example, 960 Hz in Fig. 8.

The frequency of the alternating current during the second period P2 is not particularly limited, but can be set to be proper for specification or use of the discharge lamp. The frequency of the alternating current during the second period P2 may differ for each second period P2, as illustrated in Fig. 8. For example, in Fig. 8, the frequency of the alternating current during the second period P2 is set to 320 Hz during a period P2a, 160 Hz during a period P2b, and 960 Hz during a period P2c.

A power ratio (driving current ratio) during the first period P1 is set to be smaller than a power ratio (driving current ratio) during the second period P2. In other words, the absolute value of the driving current during the first period P1 is set to be relatively smaller than the absolute value of the driving current during the second period P2. The power ratio (driving current ratio) during the first period P1 is equal to or smaller than, for example, 80% of the power ratio (driving current ratio) during the second period P2.

The power ratio (driving current ratio) of the first period P1 to the second period P2 can be set according to the lengths of the first period P1 and the second period P2. That is, an average power ratio of a combined period of the first period P1 and the second period P2 can be set to be equal to an average power ratio of the rated normal mode. Hereinafter, the detailed description will be made.

First, a case of the driving current waveform illustrated in Fig. 8 will be described as a first example.

In an example of the driving current waveform illustrated in Fig. 8, a combined length of the first period P1 and the second period P2, that is, the length of a period in which one-eye video, is set to 1/120 s. This is because the length of one frame of a video is set to 1/60 s, and each of a field of a right-eye video and a field of a left-eye video forming one frame is set to a length of half of one frame. For example, one frame in Fig. 7 is a period from time t1 to time t5. The field of the right-eye video is a period from time t1 to time t3 and the field of the left-eye video is a period from time t3 to time t5.

In Fig. 8, a length ratio of the first period P1 to the second period P2 is set to 1:3. That is, the length of the first period P1 is 1/480 s and the length of the second period P2 is 1/160 s. In this case, during a one-time one-eye video period, a one-eye video signal is written to the liquid crystal light valves 330R, 330G, and 330B a total of four times. The first writing is performed during the first period P1 and the second to fourth writings are performed during the second period P2. In this case, writing of the video signal to the liquid crystal light valves 330R, 330G, and 330B is performed once for 1/480 s. In other words, the driving frequency of the liquid crystal light valves 330R, 330G, and 330B is 480 Hz.

In the foregoing case, for example, when the power ratio of the second period P2 is set to be higher than the power ratio of the rated normal mode by 15%, the power ratio of the first period P1 is set to about 48% of the power ratio of the second period P2, so that the average power ratio of the combined period of the first period P1 and the second period P2 can be equalized to the average power ratio of the rated normal mode. Specifically, for example, as illustrated in Fig. 8, when the power ratio is a positive value, the power ratio of the first period P1 is set to 0.55 and the power ratio of the second period P2 is set to 1.15. When the power ratio is a negative value, the power ratio of the first period P1 is set to -0.55 and the power ratio of the second period P2 is set to -1.15. Thus, the average power ratio of the combined period of the first period P1 and the second period P2 can be set to 1 (the average power ratio of the rated normal mode).

Next, a case in which the length of the first period P1 is set to be equal to the length of the second period P2, as illustrated in Fig. 7, will be described as a second example.

When the length of a one-eye video period is set to 1/120 s as in Fig. 8, the length of the first period P1 is the same as the length of the second period P2, and thus each of the lengths of the first period P1 and the second period P2 is 1/240 s. In this case, for example, when the power ratio of the second period P2 is higher than the power ratio of the rated normal mode by 15%, the power ratio of the first period P1 is set to about 74% of the power ratio of the second period P2, so that the average power ratio of the combined period of the first period P1 and the second period P2 can be equalized to the average power ratio of the rated normal mode.

Specifically, for example, when the power ratio is a positive value, the power ratio of the first period P1 is set to 0.85 and the power ratio of the second period P2 is set to 1.15. When the power ratio is a negative value, the power ratio of the first period P1 is set to -0.85 and the power ratio of the second period P2 is set to -1.15. Thus, the average power ratio of the combined period of the first period P1 and the second period P2 can be set to 1 (the average power ratio of the rated normal mode). In this case, the driving frequency of the liquid crystal light valves 330R, 330G, and 330B is 240 Hz.

As exemplified above, the power ratio of the second period P2 in which one of the right-eye shutter 412 and the left-eye shutter 414 is opened is set to be larger than 1 (the average power ratio of the rated normal mode), the power ratio of the first period P1 in which both of the right-eye shutter 412 and the left-eye shutter 414 are closed is set to be less than 1 (the average power ratio of the rated normal mode), the average luminance of the discharge lamp 90, that is, the average power supplied to the discharge lamp 90, is equalized as that of the rated normal mode, and thus deterioration in the luminance of the videos entering the eyes of an observer can be reduced.

In the embodiment, since the frequency of the alternating current during the first period P1 in which the power supplied to the discharge lamp 90 is small is a high frequency, the consumption of the first electrode 92 and the second electrode 93 can be suppressed, and thus the life span of the discharge lamp 90 can be improved. Hereinafter, the detailed description will be described.

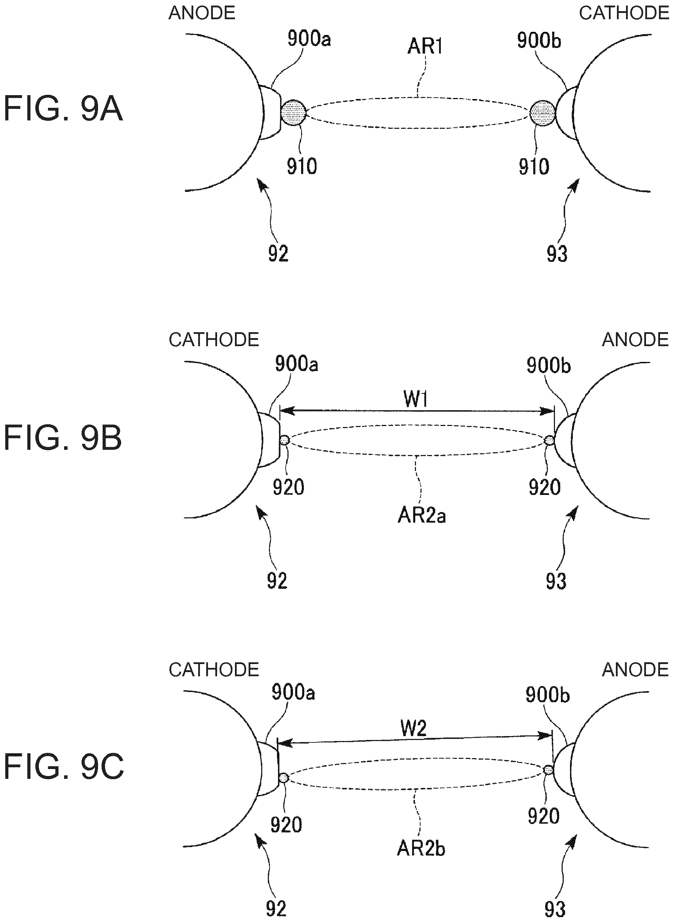

Figs. 9(A), 9(B), and 9(C) are diagrams illustrating aspects of arc discharge in the first electrode 92 and the second electrode 93. In Fig. 9(A), the first polarity state Ps1 is illustrated. That is, the first electrode 92 is an anode and the second electrode 93 is a cathode. In Figs. 9(B) and 9(C), the second polarity state Ps2 is illustrated. That is, the first electrode 92 is a cathode and the second electrode 93 is an anode.

Fig. 9(A) illustrates the aspect of discharge during the second period P2. An arc AR1 is generated between the first electrode 92 and the second electrode 93. Arc luminescent spots 910 are formed on protrusions 900a and 900b formed on the surfaces of the first electrode 92 and the second electrode 93. Since the power supplied to the discharge lamp 90 is large during the second period P2, the arc luminescent spots 910 are largely formed. Thus, the protrusion 900a formed on the surface of the first electrode 92 which is the anode is melted and the surface of the protrusion 900a is flattened.

Next, Fig. 9(B) is a diagram illustrating the second polarity state Ps2 realized when the second period P2 is switched to the first period P1 and the polarity is inverted. As illustrated in Fig. 9(B), an arc AR2a is generated between the first electrode 92 and the second electrode 93. Since the power supplied to the discharge lamp 90 decreases during the first period P1, arc luminescent spots 920 formed on the protrusions 900a and 900b decrease.

Next, Fig. 9(C) is a diagram illustrating a case in which the period is switched to the first period P1 and a predetermined time has passed. As illustrated in Fig. 9(C), the positions of the arc luminescent spots 920 of the cathode side (the side of the first electrode 92) move to the lower side. This is because the arc luminescent spots 920 during the first period P1 are smaller than the arc luminescent spots 910 during the second period P2 and easily move on the surface of the protrusion 900a flattened during the second period P2. The movement of the arc luminescent spots occurs only on the cathode side from which the electrons are radiated.

When the positions of the arc luminescent spots 920 move, the distance between the arc luminescent spots increases. That is, the distance between the arc luminescent spots is the distance between the electrodes. In Fig. 9(B), both of the position of the arc luminescent spot 920 on the side of the first electrode 92 and the position of the arc luminescent spot on the side of the second electrode 93 are located in the middle of the protrusions 900a and 900b in the vertical direction. Therefore, the arc AR2a is generated substantially horizontally, and a distance W1 between the arc luminescent spots is the same as the substantially horizontal distance between the protrusions 900a and 900b.

In contrast, since the arc luminescent spot 920 on the cathode side (the side of the first electrode 92) moves downward in Fig. 9(C), an arc AR2b is generated in a state inclined from the horizontal state, and thus a distance W2 between the arc luminescent spots is greater than the distance W1 between the arc luminescent spots.

Accordingly, when the arc luminescent spots on the electrodes move, the distance between the electrodes increases, and thus the luminance of the discharge lamp deteriorates.

When the positions of the arc luminescent spots move, the positions of the melting electrodes or the amount of melting electrodes are changed. As a result, the shapes of the electrodes become unstable and the electrodes are easily consumed.

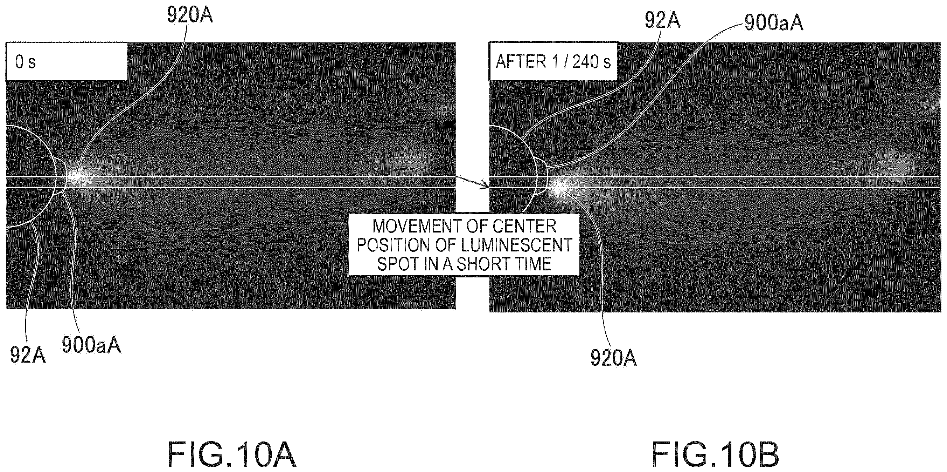

Figs. 10(A) and 10(B) illustrate photos in which the actual movement of the arc luminescent spots is shown. Both of Figs. 10(A) and 10(B) illustrate the case of the second polarity state Ps2.

Fig. 10(A) illustrates a moment (0 s) at which the first period P1 is entered. As illustrated in Fig. 10(A), it can be confirmed that an arc luminescent spot 920A is formed in the vertical direction in the middle of a protrusion 900aA formed on a first electrode 92A immediately after the first period P1 is entered.

On the other hand, Fig. 10(B) is a diagram illustrating a state after the first period P1 is entered and 1/240 s has passed. As illustrated in Fig. 10(B), it can be confirmed that the arc luminescent spot 920A moves downward on the protrusion 900aA.

On the other hand, in the embodiment, since the high-frequency alternating current is supplied during the first period P1, the polarity of each electrode is switched rapidly and a time in which each electrode serves as the cathode becomes considerably short. A movement speed of the arc luminescent spot is about 50 mm/s when acceleration is neglected. Therefore, when the time in which each electrode serves as the cathode is considerably short, a distance by which the arc luminescent point moves is extremely short while the electrode serves as the cathode and the movement of the arc luminescent spot is consequently suppressed. Accordingly, since the movement of the arc luminescent spots is suppressed, the consumption of the electrodes is suppressed, and thus the life span of the discharge lamp can be improved.

In the embodiment, the following configurations can be adopted.

During the second period P2, the current supplied to the discharge lamp 90 may be a direct current.

In Fig. 8, all of the first periods P1 and the second periods P2 start from the second polarity state Ps2. In other words, the alternating currents during all of the first periods P1 and the second periods P2 have the same phase.

In contrast, two first periods P1 temporally interposing one second period P2 may have mutually reverse phases. That is, when one first period P1 starts from the second polarity state Ps2, a subsequent first period P1 may start from the first polarity state Ps1.

Further, two second periods P2 temporally interposing one first period P1 may have mutually reverse phases. That is, when one second period P2 starts from the second polarity state Ps2, a subsequent second period P2 may start from the first polarity state Ps1.

Accordingly, since the consumption of the first electrode 92 and the consumption of the second electrode 93 can be substantially uniformized, expansion of the distance between the electrodes due to biased consumption of the electrode can be suppressed.

Hereinafter, embodiments will be described.

First, embodiment 1 will be described.

An experiment of movement of arc luminescent spots at the time of changing of the frequency of the driving current during the first period and the frequency of the driving current during the second period was performed.

A high-pressure mercury lamp of which rated power is 230 W was used as a discharge lamp.

A square-wave alternating current was used as the driving current during both of the first and second periods. When the frequency of the first period was changed into 240 Hz, 480 Hz, and 960 Hz, the frequency of the second period was changed into 160 Hz, 320 Hz, and 640 Hz, respectively.

The frequency of the second period was set to be constant in each experiment. In other words, unlike the driving current waveforms exemplified in Fig. 8, driving current waveforms of which the frequency is the same during the periods P2a, P2b, and P2c were used. The same applies to the first period.

The absolute value of the power ratio during the first period was set to 0.55 and the absolute value of the power ratio during the second period was set to 1.15. That is, the power ratio (driving current ratio) of the first period was set to about 48% of the power ratio (driving current ratio) of the second period.

Like the driving current waveform exemplified in Fig. 8, the length of the first period was set to 1/480 s and the length of the second period was set to 1/160 s.

As illustrated in Figs. 10(A) and 10(B), the movement of the arc luminescent spots was observed using photos obtained by photographing the electrodes. The electrodes were each photographed after the discharge lamp was turned on and a predetermined time passed, in other words, after an operation of the discharge lamp was stabilized and 1/960 s passed after a moment at which the second period was switched to the first period and a moment at which the period was switched to the first period. How the arc luminescent spots move was evaluated from the positions of the arc luminescent spots in the two photographed photos. The result is shown in Table 1.

**[Table 1]**

| | | Frequency (Hz) of Second Period | | |
|---|---|---|---|---|
| | | 160 | 320 | 640 |
| Frequency (Hz) of First Period | 240 | × | × | × |
| | 480 | × | × | × |
| | 960 | ○ | ○ | ○ |

In Table 1, a mark × indicates a case in which the arc luminescent spots moved and a mark ○ indicates a case in which the arc luminescent spots did not move.

From Table 1, it can be understood that the movement of the arc luminescent spots occurs in any of the cases in which the frequency of the second period is 160 Hz, 320 Hz, and 640 Hz when the frequency of the first period is 240 Hz and 480 Hz. In contrast, it can be understood that no movement of the arc luminescent spots occurs in any of the cases in which the frequency of the second period is 160 Hz, 320 Hz, and 640 Hz when the frequency of the first period is 960 Hz.

Accordingly, by setting the frequency of the first period to a high frequency, it was confirmed that the movement of the arc luminescent spots is suppressed irrespective of the frequency of the second period.

Next, embodiment 2 will be described.

Measurement of a movement distance of the arc luminescent spots at the time of the changing of the frequency of the first period without changing the driving current waveform pattern of the second period was performed. The driving current waveform pattern during the second period was set so that the frequency was changed during each period (for example, the periods P2a, P2b, and P2c) as exemplified in Fig. 8. Specifically, the frequency of the second period was set to be changed periodically in the order of 160 Hz, 320 Hz, and 960 Hz during each period. The driving current waveform pattern during the first period was set so that the frequency was the same during any period, as in embodiment 1.

The used discharge lamp, the power ratios of the first period to the second period, and the lengths of the first and second periods were set to be the same as those of embodiment 1.

The measurement of the movement distance of the arc luminescent spots was each performed when the frequency of the first period was changed to 200 Hz, 240 Hz, 400 Hz, 480 Hz, 800 Hz, and 960 Hz. The measurement of the movement distance of the arc luminescent spots was performed through image measurement using photos obtained by photographing the electrodes. The photographing of the electrodes is the same as that of embodiment 1. The result is shown in Table 2.

**[Table 2]**

| Frequency (Hz) of First Period | Movement Distance (mm) of Arc Luminescent Spots |
|---|---|
| 200 | 0.2 |
| 240 | 0.2 |
| 400 | 0.05 |
| 480 | 0.05 |
| 800 | 0 |
| 960 | 0 |

As shown in Table 2, it can be understood that the movement distance of the arc luminescent spots decreases as the frequency of the first period increases. Further, it can be confirmed that the movement distance of the arc luminescent spots is 0 mm when the frequency of the first period is 800 Hz or more and the movement of the arc luminescent spots is suppressed. From the viewpoint of the tendency that the movement distance of the arc luminescent spots decreases from 200 Hz to 480 Hz, the movement of the arc luminescent spots is considered to be sufficiently suppressed when the frequency of the first period is about 750 Hz or more.

As described above, by setting the frequency of the first period to 750 Hz or more, it was confirmed that the movement of the arc luminescent spots is suppressed and the consumption of the electrodes of the discharge lamp can be suppressed.

### Reference Signs List

- 10: discharge lamp lighting device (discharge lamp driving device)
- 40: control unit
- 90: discharge lamp
- 200: light source device
- 230: discharge lamp driving unit
- 330R, 330G, 330B: liquid crystal light valves (light modulation elements)
- 350: projection optical system
- 410: active shutter glasses
- 500: projector
- P1: first period
- P2: second period

## Claims

1. A light source device (200) comprising:
a discharge lamp (90) configured to emit light;
a discharge lamp driving unit (10) configured to supply a driving current for driving the discharge lamp to the discharge lamp; and
a control unit (40) configured to control the discharge lamp driving unit,
wherein a driving current waveform of the driving current alternately has a first period (P1) and a second period (P2),
wherein an absolute value of the driving current during the first period is smaller than an absolute value of the driving current during the second period,
wherein the control unit is configured to supply an alternating current as the driving current to the discharge lamp during the first period,
wherein a frequency of the alternating current during the first period is equal to or higher than 750 Hz,
wherein the control unit is configured to control the discharge lamp driving unit (10) to supply an alternating current as the driving current to the discharge lamp (90) during the second period (P2), wherein the frequency of the alternating current during the first period (P1) is constant,
and **characterised in that** a frequency of the alternating current during the second period differs between different second periods (P2) in the driving current waveform.

2. The light source device (200) according to claim 1,
wherein the absolute value of the driving current during the first period (P1) is equal to or less than 80% of the absolute value of the driving current during the second period (P2).

3. The light source device (200) according to claim 1 or claim 2,
wherein the control unit (40) is configured to supply an alternating current with mutually opposite phases as the driving current to the discharge lamp (90) during two sequential first periods (P1).

4. The light source device (200) according to any one of claims 1 to 3,
wherein the control unit (40) is configured to supply an alternating current with mutually opposite phases as the driving current to the discharge lamp (90) during two sequential second periods (P2).

5. A projector (500) comprising:
the light source device (200) according to any one of claims 1 to 4;
a light modulation element (330R, G, B) configured to modulate light emitted from the discharge lamp (90) according to a video signal; and
a projection optical system (350) configured to project the light modulated by the light modulation element (330R, G, B) onto a projection surface (700).

6. A projection system (400) comprising:
the projector (500) according to claim 5; and
shutter glasses (410) that include a right-eye shutter (412) and a left-eye shutter (414),
wherein the projector alternately switches and outputs right-eye video and left-eye video at predetermined switching times (t1, t3, t5, t7), and
wherein a period interposed between temporally adjacent ones of the predetermined switching times includes the first period (P1) and the second period (P2).

7. The projection system (400) according to claim 6,
wherein the shutter glasses (410) are configured to be switched between an open state and a closed state based on a signal from the control unit (40),
wherein in the first period (P1), both of the right-eye shutter (412) and the left-eye shutter (414) are in the closed state, and
wherein in the second period (P2), one of the right-eye shutter and the left-eye shutter is in the open state, and the other is in the closed state.

## Patentansprüche

1. Lichtquellenvorrichtung (200) umfassend:
eine Entladungslampe (90), die konfiguriert ist, Licht auszustrahlen;
eine Entladungslampenantriebseinheit (10), die konfiguriert ist, der Entladungslampe einen Antriebsstrom zum Antreiben der Entladungslampe zuzuleiten; und
eine Steuereinheit (40), die konfiguriert ist, die Entladungslampenantriebseinheit zu steuern,
wobei eine Antriebsstromwellenform des Antriebsstroms abwechselnd eine erste Periode (P1) und eine zweite Periode (P2) hat,
wobei ein absoluter Wert des Antriebsstroms während der ersten Periode kleiner ist als ein absoluter Wert des Antriebsstroms während der zweiten Periode,
wobei die Steuereinheit konfiguriert ist, der Entladungslampe einen Wechselstrom als den Antriebsstrom während der ersten Periode zuzuleiten,
wobei eine Frequenz des Wechselstroms während der ersten Periode gleich oder höher als 750 Hz ist,
wobei die Steuereinheit konfiguriert ist, die Entladungslampenantriebseinheit (10) zu steuern, der Entladungslampe (90) einen Wechselstrom als den Antriebsstrom während der zweiten Periode (P2) zuzuleiten,
wobei die Frequenz des Wechselstroms während der ersten Periode (P1) konstant ist,
und **dadurch gekennzeichnet, dass**
sich eine Frequenz des Wechselstroms während der zweiten Periode zwischen verschiedenen zweiten Perioden (P2) in der Antriebsstromwellenform unterscheidet.

2. Lichtquellenvorrichtung (200) nach Anspruch 1,
wobei der absolute Wert des Antriebsstroms während der ersten Periode (P1) gleich oder weniger als 80% des absoluten Werts des Antriebsstroms während der zweiten Periode (P2) ist.

3. Lichtquellenvorrichtung (200) nach Anspruch 1 oder Anspruch 2,
wobei die Steuereinheit (40) konfiguriert ist, einen Wechselstrom mit einander entgegengesetzten Phasen als den Antriebsstrom der Entladungslampe (90) während zwei aufeinanderfolgenden ersten Perioden (P1) zuzuleiten.

4. Lichtquellenvorrichtung (200) nach einem der Ansprüche 1 bis 3,
wobei die Steuereinheit (40) konfiguriert ist, einen Wechselstrom mit einander entgegengesetzten Phasen als den Antriebsstrom der Entladungslampe (90) während zwei aufeinanderfolgenden zweiten Perioden (P2) zuzuleiten.

5. Projektor (500) umfassend:
die Lichtquellenvorrichtung (200) nach einem der Ansprüche 1 bis 4;
ein Lichtmodulationselement (330R, G, B), das konfiguriert ist, Licht, das von der Entladungslampe (90) ausgestrahlt wird, gemäß einem Videosignal zu modulieren; und
ein optisches Projektionssystem (350), das konfiguriert ist, das Licht, das durch das Lichtmodulationselement (330R, G, B) moduliert wird, auf eine Projektionsfläche (700) zu projizieren.

6. Projektionssystem (400) umfassend:
den Projektor (500) nach Anspruch 5; und
eine Shutterbrille (410), die einen Verschluss für das rechte Auge (412) und einen Verschluss für das linke Auge (414) enthält,
wobei der Projektor abwechselnd Video für das rechte Auge und Video für das linke Auge zu vorbestimmten Umschaltzeitpunkten (t1, t3, t5, t7) umschaltet und ausgibt, und
wobei eine Periode, die zwischen zeitlich angrenzenden der vorbestimmten Umschaltzeitpunkte eingefügt ist, die erste Periode (P1) und die zweite Periode (P2) enthält.

7. Projektionssystem (400) nach Anspruch 6,
wobei die Shutterbrille (410) konfiguriert ist, basierend auf einem Signal von der Steuereinheit (40) zwischen einem offenen Zustand und einem geschlossenen Zustand umgeschaltet zu werden,
wobei in der ersten Periode (P1) sowohl der Verschluss für das rechte Auge (412) wie auch der Verschluss für das linke Auge (414) im geschlossenen Zustand sind, und wobei in der zweiten Periode (P2) einer vom Verschluss für das rechte Auge und dem Verschluss für das linke Auge im offenen Zustand ist und der andere im geschlossenen Zustand ist.

## Revendications

1. Dispositif de source lumineuse (200) comprenant :
une lampe à décharge (90) configurée pour émettre de la lumière ;
une unité de commande de lampe à décharge (10), configurée pour fournir un courant de commande à la lampe à décharge pour commander la lampe à décharge ; et
une unité de contrôle (40) configurée pour contrôler l'unité de commande de lampe à décharge,
dans lequel une forme d'onde de courant de commande du courant de commande a une première période (P1) et une deuxième période (P2) en alternance,
dans lequel une valeur absolue du courant de commande pendant la première période est plus faible qu'une valeur absolue du courant de commande pendant la deuxième période,
dans lequel l'unité de contrôle est configurée pour fournir un courant alternatif en tant que courant de commande à la lampe à décharge pendant la première période,
dans lequel une fréquence du courant alternatif pendant la première période est supérieure ou égale à 750 Hz,
dans lequel l'unité de contrôle est configurée pour contrôler l'unité de commande de lampe à décharge (10) pour fournir un courant alternatif en tant que courant de commande à la lampe à décharge (90) pendant la deuxième période (P2),
dans lequel la fréquence du courant alternatif pendant la première période (P1) est constante,
et **caractérisé en ce qu'**une fréquence du courant alternatif pendant la deuxième période diffère entre différentes deuxièmes périodes (P2) dans la forme d'onde du courant de commande.

2. Dispositif de source lumineuse (200) selon la revendication 1,
dans lequel la valeur absolue du courant de commande pendant la première période (P1) est inférieure ou égale à 80% de la valeur absolue du courant de commande pendant la deuxième période (P2).

3. Dispositif de source lumineuse (200) selon la revendication 1 ou la revendication 2,
dans lequel l'unité de contrôle (40) est configurée pour fournir un courant alternatif avec des phases mutuellement opposées en tant que courant de commande à la lampe à décharge (90) pendant deux premières périodes (P1) séquentielles.

4. Dispositif de source lumineuse (200) selon l'une quelconque des revendications 1 à 3,
dans lequel l'unité de contrôle (40) est configurée pour fournir un courant alternatif avec des phases mutuellement opposées en tant que courant de commande à la lampe à décharge (90) pendant deux deuxièmes périodes (P2) séquentielles.

5. Projecteur (500) comprenant :
le dispositif de source lumineuse (200) selon l'une quelconque des revendications 1 à 4 ;
un élément de modulation de lumière (330R, V, B) configuré pour moduler de la lumière émise par la lampe à décharge (90) selon un signal vidéo ; et
un système optique de projection (350) configuré pour projeter la lumière modulée par l'élément de modulation de lumière (330R, V, B) sur une surface de projection (700).

6. Système de projection (400) comprenant :
le projecteur (500) selon la revendication 5 ; et
des lunettes à obturateurs (410) qui comprennent un obturateur d'oeil droit (412) et un obturateur d'oeil gauche (414),
dans lequel le projecteur commute en alternance et fait sortir une vidéo d'oeil droit et une vidéo d'oeil gauche à des moments de commutation prédéterminés (t1, t3, t5, t7), et
dans lequel une période intercalée entre des moments temporairement adjacents des moments de commutation prédéterminés comprend la première période (P1) et la deuxième période (P2).

7. Système de projection (400) selon la revendication 6,
dans lequel les lunettes à obturateurs (410) sont configurées pour être commutées entre un état ouvert et un état fermé sur la base d'un signal de l'unité de contrôle (40),
dans lequel, dans la première période (P1), l'obturateur d'oeil droit (412) tout comme l'obturateur d'oeil gauche (414) sont à l'état fermé, et
dans lequel, dans la deuxième période (P2), l'un parmi l'obturateur d'oeil droit et l'obturateur d'oeil gauche est à l'état ouvert, et l'autre est à l'état fermé.
